(19) Europäisches Patentamt
European Patent Office
Office européen des brevets

(11) **EP 2 390 707 B1**

(12) **EUROPEAN PATENT SPECIFICATION**

(45) Date of publication and mention
of the grant of the patent:
**04.12.2019 Bulletin 2019/49**

(51) Int Cl.:
*G02B 26/10* (2006.01)     *G01B 9/02* (2006.01)
*G02B 6/125* (2006.01)     *G02F 1/21* (2006.01)
*G02F 1/29* (2006.01)     *H01Q 3/30* (2006.01)

(21) Application number: **10013274.5**

(22) Date of filing: **04.10.2010**

(54) **Beam scanning system for sensing biological substances**

Strahlenabtastsystem zum Abtasten biologischer Substanzen

Système de balayage de faisceau pour la détection de substances biologiques

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.05.2010 KR 20100049185**

(43) Date of publication of application:
**30.11.2011 Bulletin 2011/48**

(73) Proprietor: **Korea Institute of Science and
Technology
Seoul 136-791 (KR)**

(72) Inventors:
  • **Kim, Jae Hun**
    **Seoul 158-759 (KR)**
  • **Lee, Seok**
    **Seoul 137-040 (KR)**
  • **Woo, Deok Ha**
    **Seoul 120-092 (KR)**
  • **Byun, Young Tae**
    **Gyeonggi-do 471-709 (KR)**
  • **Kim, Sun Ho**
    **Seoul 110-846 (KR)**
  • **Jhon, Young Min**
    **Seoul 135-956 (KR)**
  • **Jang, Chi Woong**
    **Gyeonggi-do 448-721 (KR)**
  • **Kim, Shin Geun**
    **Seoul 121-882 (KR)**

(74) Representative: **advotec.
Patent- und Rechtsanwälte
Widenmayerstrasse 4
80538 München (DE)**

(56) References cited:
**EP-A2- 0 729 057      US-A1- 2005 069 258
US-A1- 2006 237 666      US-A1- 2007 178 607
US-A1- 2008 102 478      US-A1- 2008 180 685**

• **YIN ET AL: "Ultra-fast speed, low grating lobe
optical beam steering using unequally spaced
phased array technique" OPTICS
COMMUNICATIONS, vol. 270, no. 1, 1 December
2006 (2006-12-01), pages 41-46, XP005730457
NORTH-HOLLAND PUBLISHING CO.
AMSTERDAM, NL ISSN: 0030-4018 DOI:
10.1016/J.OPTCOM.2006.11.001**
• **Anonymous: "Introduction to Integrated
Photonics" Wiley, [Online] 6 February 2007
(2007-02-06), pages 1-23, XP002621363 Retrieved
from the Internet:
URL:http://media.wiley.com/product_data/ex
cerpt/85/04708486/0470848685.pdf> [retrieved
on 2011-02-09]**

**Description**

TECHNICAL FIELD

The present disclosure generally relates to a beam scanning system, and more particularly to a beam scanning system using an optical phased array for sensing biological substances, such as a cancer cell, a microorganism and the like, in a microfluidic pipe.

BACKGROUND

A beam scanning system using a laser light source has been extensively used in various fields, such as laser radars, large area scanning displays, free space optical communications, laser printers, barcode readers and the like. Various types of beam scanning systems have been developed, for example, a mechanical beam scanning system, a microelectromechanical systems (MEMs) based beam scanning system, a beam scanning system using an optical phased array, and the like.

The mechanical beam scanning system may generally use a polygon mirror or a holographic disk, so that excellent performance may be exhibited in terms of light utilization efficiency and scanning range. However, the mechanical beam scanning system may require a highly precise optical device for higher accuracy and a structure thereof may be complex, so that it may be disadvantageous in price competitiveness. Further, since the mechanical beam scanning system operates mechanically, its scanning speed may be limited to a range of milliseconds.

The MEMs based beam scanning system may also operate mechanically in the same manner as the mechanical beam scanning system, so that its scanning speed may be limited. In order to resolve the problem of a low scanning speed, research using a lithium niobate electrooptic prism deflector has been carried out. When the lithium niobate electrooptic prism deflector is used in the MEMs based beam scanning system, a relatively high scanning speed of a range of nanoseconds may be achieved. However, the lithium niobate electrooptic prism deflector may require a high driving voltage of over 500V, which may not be practical.

Recently, research for a beam scanning system using an optical phased array has been carried out to overcome the above problems. The beam scanning system using the optical phased array may be advantageous in terms of a low driving voltage and a high scanning speed. S. Yin et al. (Optics Communications 270 (2007), 41-46, "Ultra-fast speed, low grating lobe optical beam steering using unequally spaced phased array technique") refers to a phased array composed of a number of phase elements which is applied in optical beam scanning.

SUMMARY

Embodiments for sensing biological substances, such as a cancer cell, a microorganism and the like, in a microfluidic pipe through beam scanning using an optical phased array are disclosed herein. In one embodiment, by way of non-limiting example, a beam scanning system includes a light source configured to generate a supercontinuum light beam; an optical device configured to receive the supercontinuum light beam for guidance thereof to at least two output ports; and a power supply unit configured to supply voltage to one output port of the at least two output ports to change a phase of the light beam from said one output port.

This Summary is provided to introduce a selection of concepts in a simplified form that are further described below in the Detailed Description. This Summary is not intended to identify key or essential features of the claimed subject matter, nor is it intended to be used in determining the scope of the claimed subject matter.

BRIEF DESCRIPTION OF THE DRAWINGS

FIG. 1 is a schematic diagram showing beam scanning using an optical phased array.
FIG. 2 is a schematic diagram showing an illustrative embodiment of a beam scanning system.
FIG. 3 is a schematic diagram showing an illustrative embodiment of an optical device.

DETAILED DESCRIPTION

A detailed description may be provided with reference to the accompanying drawings. One of ordinary skill in the art may realize that the following description is illustrative only and is not in any way limiting. Other embodiments of the present invention may readily suggest themselves to such skilled persons having the benefit of this disclosure.

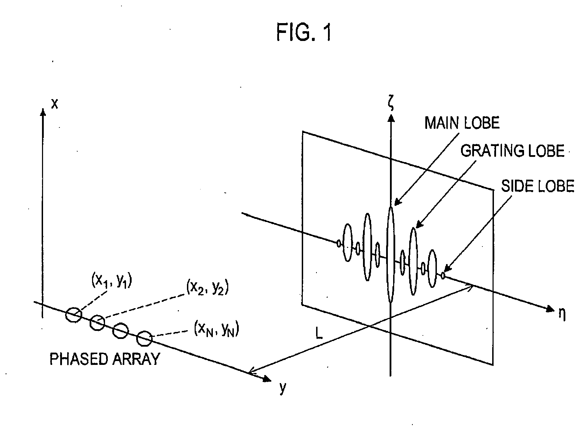

FIG. 1 is a schematic diagram showing beam scanning using an optical phased array. As shown in FIG 1, when beams are projected from light sources of a phased array on the x-y plane into the $\xi$-$\eta$ plane, an interference pattern may appear on the $\xi$-$\eta$ plane. This appearance of the interference pattern may be accounted for by the following equation.

$$ I(\xi,\eta) = \left| \sum_{n=1}^{N} A_n \exp(j\phi_n) \exp\left[ -j\frac{2\pi}{\lambda L}(x_n\xi + y_n\eta) \right] \right|^2 \times \exp\left[ -\frac{1}{2}\left(\frac{2\pi\omega_0}{\lambda L}\right)^2 (\xi^2 + \eta^2) \right] $$

(1)

where $A_n$ represents a light beam intensity emitted from an nth light source, $\phi_n$ represents a phase of the light beam emitted from the nth light source, $\omega 0$ represents a spot size of the light beam, $\lambda$ represents a wavelength of the light beam, $L$ represents a distance between the x-y plane and the $\xi$-$\eta$ plane, and $x_n$ and $y_n$ represent a location of the nth light sources on the x-y plane.

As shown in equation (1), if a phase of a light beam emitted from the light source is changed, a location of the interference pattern may also be changed on the $\xi$-$\eta$ plane. Thus, beam scanning may be performed by changing the location of the interference pattern in one embodiment.

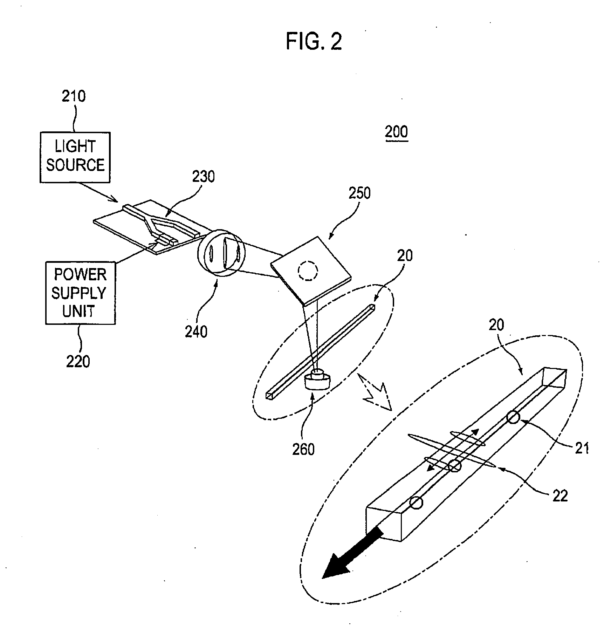

FIG 2 is a schematic diagram showing an illustrative embodiment of a beam scanning system. Referring to FIG 2, the beam scanning system 200 may include a light source 210, a power supply unit 220, an optical device 230, a beam focusing unit 240, a mirror 250 and a beam processing unit 260. The beam scanning system 200 may further include a storage unit (not shown) for storing information related with a plurality of biological substances ("biological substance related information"). The biological substance related information may include spectrum data and images, and the like, that are associated with the biological substances.

The light source 210 may be configured to generate a light beam. In one embodiment, the light source may include a supercontinuum light source. Any type of light sources capable of generating a supercontinuum light beam may be used as the light source 210.

The power supply unit 220 may be configured to supply regulated voltages. The voltage may be supplied to the optical device 230. In one embodiment, any types of electric devices capable of supplying regulated voltages may be used as the power supply unit 220.

The optical device 230 may receive the light beam emitted from the light source 210 for guidance thereof in at least two paths. The optical device 230 may be configured to change a phase of the light beam, which passes through one of the paths, responsive to the voltage supplied from the power supply unit 220. Therefore, a location of an interference pattern of the light beam, which is a far-field pattern of the light beam, may be adjusted.

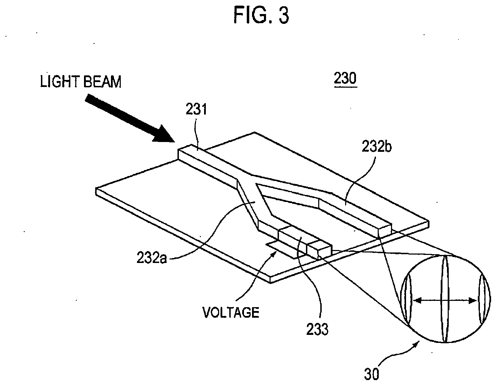

FIG 3 is a schematic diagram showing an illustrative embodiment of the optical device 230. Referring to FIG. 3, the optical device 230 may include a Y-branch type of optical device. The optical device 230 may include an input port 231 and two output ports 232a and 232b. The input port 231 may receive the light beam emitted from the light source 210. The output port 232a and 232b may branch off from the input port 231. The optical device 230 may further include an electrode 233 that may be mounted on one of the output ports 232a and 232b (e.g., output port 232a). The voltage may be applied to the electrode 233 such that an electric field is generated. Thus, a phase of the light beam, which is guided by the corresponding output port, e.g., the output port 232a, may be changed in response to the electric field.

Although the foregoing embodiment has described that the optical device 230 has two output ports 232a and 232b, the number of the output ports may not be limited thereto. For example, the optical device 230 may include more than two output ports. Also, the electrode 233 may be mounted on the output port 232a in one embodiment. However, it should be noted herein that the way the electrode 233 is mounted may not be limited thereto. For example, the optical device 230 may be mounted on the output port 232b.

In FIG. 3, reference numeral "30" represents the interference pattern, which is a far-field pattern of the light beams outputted from the output ports 232a and 232b. When voltage is applied to the electrode 233, a carrier density of the light beam, which is guided by a waveguide, i.e., the output port 232a, may vary and a refractive index of the light beam may also vary in response to the change of the carrier density. Thus, the phase of the light beam guided by the output port 232a may be changed, so that a phase difference between the light beams outputted from the output ports 232a and 232b may be caused. If the phase of the supercontinuum light beam is changed as explained above, the position of the interference pattern may also be changed, as shown in equation (1).

In one embodiment, the location of the interference pattern has been adjusted by using the electric field generated by applying the voltage to the electrode 233. However, the adjustment of location of the interference pattern may not be limited thereto. In another embodiment, an optical field or a microwave may be used to change the phase of the light beam, which may be guided by the optical device, for location adjustment of the interference pattern.

Referring back to FIG 2, the beam focusing unit 240 may be configured to focus the light beams outputted from the optical device 230. The beam focusing unit 240 may be any devices capable of focusing the light beams, such as a focusing lens.

The mirror 250 may reflect the light beams, which may be focused in the beam focusing unit 240, to traverse across a target 20, such as a microfluidic pipe. The microfluidic pipe 20 may be a pipe in which the biological substances 21 including a cancer cell, a microscopic organism and the like may flow.

The beam processing unit 260 may be configured to sense the biological substances 21 flowing in the microfluidic pipe 20 based on the light beams, which have traversed across the microfluidic pipe 20. Specially, the beam processing unit 260 may receive the light beams 22 that have traversed across the microfluidic pipe 20 and form biological information on the biological substance based thereon. In one embodiment, the biological information may include spectrum data and images of the biological substances. The beam processing unit 260 may retrieve the biological substance related information from the storage unit and compare the biological information with the retrieved biological substance related information. The beam processing unit 260 may form identity information of the biological substance according to the comparison result. The identity information may be outputted through an output device (not shown). The output device may include a display unit, a printer and the like. Also, the output device may be a storage unit.

In one embodiment, the beam processing unit 260 may include a light sensor array (not shown) in which a plurality of light sensors for sensing different wavelength bands may be arrayed. In another embodiment, the beam processing unit 260 may include a wide-band light sensor array, in which a plurality light sensors may be included. In one embodiment, each of the light sensors may have a different wavelength filter. The light sensor may include a charge-coupled device for imaging and a spectrometer for spectroscopy. Each of the light sensors may output a sensing signal in response to the received light beam. The beam processing unit 260 may successively form an image of the biological substance and sense a spectroscopic peak by combining the sensing signals outputted from the light sensor array. Thus, an in-situ analysis of the biological substances in the microfluidic pipe may be achieved according to one embodiment.

In the above embodiment, it has been described that the mirror is employed for reflecting the focused light beams to the microfluidic pipe 20. However, in another embodiment, the focused light beams may be directly projected to the microfluidic pipe 20.

**Claims**

1. A beam scanning system (200) for sensing a biological substance flowing in a microfluidic pipe (20), comprising:

   a light source (210) configured to generate a supercontinuum light beam;
   an optical device (230) configured to receive the supercontinuum light beam for guidance thereof to at least two output ports (232a, 232b); and
   a power supply unit (220) configured to supply voltage to one output port (232a) of said at least two output ports to change a phase of the light beam from said one output port,
   wherein the optical device (230) changes a location of an interference pattern (30) of the light beam according to changing the phase of the light beam, and wherein the system further comprises a beam processing unit (260) configured to receive light beams (22) that have traversed across the microfluidic pipe (20) and to form biological information on the biological substance based on the received beams.

2. The beam scanning system of Claim 1, wherein the optical device (230) comprises an input port (231) configured to receive the supercontinuum light beam, and wherein the at least two output ports (232a, 232b) are configured to branch off from the input port (231) to output the light beam, and the optical device (230) comprises an electrode (233) mounted on said one output port (232a) and configured to generate an electric field responsive to the voltage supplied thereto.

3. The beam scanning system of Claim 1 or 2, wherein the optical device (230) further comprises a Y-branch type of optical device.

4. The beam scanning system of one of Claims 1 to 3, further comprising:

   a storage unit to store biological substance related information;
   a beam focusing unit (240) configured to focus the light beams outputted from the optical device (230);
   a mirror (250) configured to reflect the focused beams to traverse across the microfluidic pipe (20); and
   the beam processing unit (260) being further configured to retrieve the biological substance related information from the storage unit for comparison with the biological information and to form identity information of the biological substance flowing in the microfluidic pipe according to the comparison.

5. The beam scanning system of Claim 4, wherein the biological information comprises any one of spectrum data and beam image of the biological substance.

6. The beam scanning system of Claim 4 or 5, wherein the beam processing unit (260) comprises a light sensor array having a plurality of light sensors each for sensing a different wavelength.

7. The beam scanning system of Claim 4 or 6, wherein the beam processing unit (260) comprises a light sensor array having a plurality of light sensors each having a different wavelength filter.

**Patentansprüche**

1. Strahlabtastsystem (200) zum Abtasten einer in einem Mikrofluidik-Rohr (20) schwimmenden biologischen Substanz, umfassend:

   eine Lichtquelle (210), die dazu ausgelegt ist, einen Superkontinuum-Lichtstrahl zu erzeugen;
   eine optische Einrichtung (230), die dazu ausgelegt ist, den Superkontinuum-Lichtstrahl zu empfangen, um diesen zu mindestens zwei Ausgangsanschlüssen (232a, 232b) zu führen; und
   eine Stromversorgungseinheit (220), die dazu ausgelegt ist, Spannung an einen Ausgangsanschluss (232a) der mindestens zwei Ausgangsanschlüsse anzulegen, um eine Phase des Lichtstrahls von diesem einen Ausgangsanschluss zu ändern, wobei die optische Einrichtung (230) eine Position eines Interferenzmusters (30) des Lichtstrahls entsprechend der Änderung der Phase des Lichtstrahls ändert und
   wobei das System ferner eine Strahlenverarbeitungseinheit (260) umfasst, welche dazu ausgelegt ist, Lichtstrahlen (22) zu empfangen, welche das Mikrofluidik-Rohr durchquert haben (20), und biologische Informationen über die biologische Substanz auf Basis der empfangenen Strahlen zu bilden.

2. Strahlabtastsystem nach Anspruch 1, wobei die optische Einrichtung (230) einen Eingangsanschluss (231) umfasst, welcher dazu ausgelegt ist, den Superkontinuum-Lichtstrahl zu empfangen, und wobei die mindestens zwei Ausgangsanschlüsse (232a, 232b) dazu ausgelegt sind, von dem Eingangsanschluss (231) abzuzweigen, um den Lichtstrahl auszugeben, und wobei die optische Einrichtung (230) eine Elektrode (233) umfasst, welche an dem einen Ausgangsanschluss (232a) angebracht ist und welche dazu ausgelegt ist, eine elektrische Feldreaktion auf die daran angelegte Spannung zu erzeugen.

3. Strahlabtastsystem nach Anspruch 1 oder 2, wobei die optische Einrichtung (230) ferner eine optische Einrichtung des Y-Verzweigungstyps umfasst.

4. Strahlabtastsystem nach einem der Ansprüche 1 bis 3, ferner umfassend:

   eine Speichereinheit zum Speichern von Informationen in Bezug auf die biologische Substanz;
   eine Strahlfokussiereinheit (240), die dazu ausgelegt ist, die von der optischen Einrichtung (230) ausgegebenen Lichtstrahlen zu fokussieren;
   einen Spiegel (250), der dazu ausgelegt ist, die fokussierten Strahlen zu reflektieren, damit diese das Mikrofluidik-Rohr (20) durchqueren; und
   wobei die Strahlenverarbeitungseinheit (260) ferner dazu ausgelegt ist, die Informationen in Bezug auf die biologische Substanz von der Speichereinheit zum Vergleich mit der biologischen Information abzurufen und Übereinstimmungsinformationen der in dem Mikrofluidik-Rohr schwimmenden biologischen Substanz entsprechend dem Vergleich zu bilden.

5. Strahlabtastsystem nach Anspruch 4, wobei die biologische Information Spektrumdaten und/oder ein Strahlenbild der biologischen Substanz umfasst.

6. Strahlabtastsystem nach Anspruch 4 oder 5, wobei die Strahlenverarbeitungseinheit (260) ein Lichtsensorarray mit einer Vielzahl von Lichtsensoren jeweils zum Abtasten einer unterschiedlichen Wellenlänge umfasst.

7. Strahlabtastsystem nach Anspruch 4 oder 6, wobei die Strahlenverarbeitungseinheit (260) ein Lichtsensorarray mit einer Vielzahl von Lichtsensoren jeweils mit einem unterschiedlichen Wellenlängenfilter umfasst.

**Revendications**

1. Système de balayage à faisceau (200) pour balayer une substance biologique flottant dans un tube microfluidique (20), comprenant :

   une source lumineuse (210) configurée pour générer un faisceau lumineux de supercontinuum ;
   un dispositif optique (230) configuré pour recevoir le faisceau lumineux de supercontinuum pour guider le même vers au moins deux ports de sortie (232a, 232b) ; et
   une unité d'alimentation électrique (220) configurée pour alimenter un port de sortie (232a) desdits deux ports de sortie en tension pour changer une phase du faisceau lumineux dudit port de sortie,
   dans lequel le dispositif optique (230) change une position d'un dessin interférentiel (30) du faisceau lumineux selon le changement de la phase du faisceau lumineux, et
   dans lequel le système en outre comprend une unité de traitement de faisceaux (260) configurée pour recevoir des faisceaux lumineux (22) qui ont traversé le tube microfluidique (20) et pour former des informations biologiques sur la substance biologique sur la base des faisceaux reçus.

2. Système de balayage à faisceau selon la revendication 1, dans lequel le dispositif optique (230) comprend un port d'entrée (231) configuré pour recevoir le faisceau lumineux de supercontinuum, et dans lequel les au moins deux ports de sortie (232a, 232b) sont configurés pour bifurquer du port d'entrée (231) pour émettre le faisceau lumineux, et dans lequel le dispositif optique (230) comprend une électrode (233) montée sur ledit port de sortie (232a) et configurée pour générer une réponse de champ électrique à la tension alimentée.

3. Système de balayage à faisceau selon la revendication 1 ou 2, dans lequel le dispositif optique (230) en outre comprend un dispositif optique en Y.

4. Système de balayage à faisceau selon l'une quelconque des revendications 1 à 3, en outre comprenant :

   une unité de mémoire pour stocker des informations en relation à la substance biologique ;
   une unité de focalisation de faisceaux (240) configurée pour focaliser les faisceaux lumineux émis par le dispositif optique (230) ;
   un miroir (250) configuré pour refléter les faisceaux focalisés pour traverser le tube microfluidique (20) ; et
   l'unité de traitement de faisceaux (260) en outre étant configurée pour consulter les informations en relation à la substance biologique de l'unité de mémoire pour comparaison avec l'information biologique et pour former des informations d'égalité de la substance biologique flottant dans le tube microfluidique selon la comparaison.

5. Système de balayage à faisceau selon la revendication 4, dans lequel l'information biologique comprend des données de spectre et/ou une image de faisceau de la substance biologique.

6. Système de balayage à faisceau selon la revendication 4 ou 5, dans lequel l'unité de traitement de faisceaux (260) comprend un réseau de capteurs optiques ayant une pluralité de capteurs optiques pour balayer une longueur d'onde différente respectivement.

7. Système de balayage à faisceau selon la revendication 4 ou 6, dans lequel l'unité de traitement de faisceaux (260) comprend un réseau de capteurs optiques ayant une pluralité de capteurs optiques chacun ayant un filtre de longueur d'onde différente.

FIG. 1

FIG. 2

# FIG. 3

LIGHT BEAM

230

231

232b

232a

VOLTAGE

233

30

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. YIN et al.** Ultra-fast speed, low grating lobe optical beam steering using unequally spaced phased array technique. *Optics Communications,* 2007, vol. 270, 41-46